# EUROPEAN PATENT APPLICATION

(11) **EP 2 680 188 A1**
(43) Date of publication of application: **01.01.2014**
(21) Application number: 13173715.7
(22) Date of filing: 26.06.2013
(51) Int. Cl.: G06K 7/10, H01Q 1/22

(54) **Product management system for reading an electronic identification tag and method of managing product identification by reading an electronic identification tag**

(30) Priority: 27.06.2012 US 201213534074
(71) Applicant: The Goodyear Tire & Rubber Company, Akron, Ohio 44316 (US)
(72) Inventor: Fenkanyn, John Michael, Akron, OH Ohio 44312 (US)
(74) Representative: Kutsch, Bernd

(57) **Abstract**

A product management system for reading an electronic identification tag is disclosed. The system comprises: at least one manufactured product (28) having the electronic identification tag (10) secured to the one product (28); a pass-through portal (42) having a portal opening (44) positioned and dimensioned to permit the at least one product (28) to be transported through the portal opening (44); a flexible swingable curtain (46) suspended at the portal (42) to depend downward into the portal opening (44), wherein the curtain (46) within the portal opening (44) is positioned for contacting engagement with the at least one product (28) whereby the curtain (46) operatively swings and engages against the at least one product (28) as the at least one product (28) passes through the portal opening (44); antenna element means (48) secured to the flexible curtain (46) for swinging with the curtain (46) into a position operatively accommodating receipt by the antenna element means (48) of an electronic transmission from the electronic identification tag (10) as the at least one product (28) moves through the portal opening (44). Preferably, the product (28) is a tire. Also, a method of managing product identification by reading an electronic identification tag (10) is disclosed using such a system

## Description

### Field of the Invention

The present invention relates generally to a product management system for reading an electronic identification tag and a method of managing product identification by reading an electronic identification tag. Preferably, the product is a tire having a readable RFID identification tag incorporated therein. Preferably, the system and method comprises a reader portal for reading RFID tags in tires.

### Background of the Invention

It is useful to incorporate an RFID identification tag into a tire in order to enable an identification of the tire throughout the useful service life of the tire. Such tags age affixed to the tire either during pre-cure tire build or during a post-cure tag attachment procedure. Such tires are manufactured by generally conventional factory techniques and are shipped from the factory either to a designated automobile original equipment manufacturer (OEM) or to a tire dealer for use as a replacement tires. In the course of post-manufacture handling, the tires are typically stacked and moved by forklift trucks with a metal clamp to hold the stack of tires. Tires are then moved through a warehouse and pass either through dock doors for loading onto trailers/trucks or move through alternative warehouse openings to other shipping points of deportation.

### Summary of the Invention

The invention relates to a system in accordance with claim 1 and to a method in accordance with claim 12.

Dependent claims refer to preferred embodiments of the invention.

In one aspect of the invention a product management system and method for reading an electronic identification tag secured to a manufactured product is provided. The system preferably includes a portal having a portal opening positioned and dimensioned to permit the product to be transported through the portal opening; a flexible curtain pivotally suspended at the portal to depend downward into the portal opening, the curtain within the portal opening being positioned for contacting engagement with the manufactured product as the one product passes through the portal opening. An antenna is secured to the flexible curtain and swings with the curtain into a position operatively accessible for an electronic data transmission from the electronic identification tag as the one product moves through the portal opening.

In another preferred aspect, the system includes an electronic reader coupled to receive the electronic data transmission from the curtain- mounted antenna.

According to a further preferred aspect, the antenna is composed of a flexible, transparent material composition and is secured within the flexible curtain.

The curtain preferably includes a multiple vertically suspended, independently moving, flexible strips. The strips preferably have a mutual spacing and position within the portal opening to substantially ensure that at least one of the flexible strips contacts the manufactured product or each product within a vertical stack of such products as the product/stack moves through the portal opening.

In a preferred aspect of the invention, the product is a tire such as a pneumatic tire.

In a preferred aspect of the invention, the flexible curtain is positioned and configured to depend into the portal opening to an extent sufficient to substantially ensure contact with each of the plurality of products within the one vertical stack as the vertical stack moves through the portal opening.

### Brief Description of the Drawings

The invention will be described by way of example and with reference to the accompanying drawings in which:
FIG. 1 is a perspective view of a known RFID tag.
FIG. 2A is a perspective cut-away view of tire showing upper side wall RFID tag location.
FIG. 2B is a perspective cut-away view of tire showing apex area RFID tag location.
FIG. 3 is a perspective view of RFID tag laminated between opposed strips.
FIG. 4 is a perspective view of RFID tag locations for tags used in FIG. 3.
FIG. 5A through 5D are plan views of wiring embodiments for the hanging antennas.
FIG. 6A is an exploded perspective view of flexible hanging antenna.
FIG. 6B is an exploded perspective view of antenna showing bracket placement.
FIG. 7 is a perspective view of top portion of hanging flexible antenna assembly.
FIG. 8 is a perspective view of top portion of hanging flexible antenna assembly showing cable connectors.
FIG. 9 is a perspective view of forklift with tire stack and flexible hanging antennas.
FIG. 9B is a Perspective view of forklift pushing tires through flexible hanging antennas for scanning.
FIG. 10 is a schematic view of tire stack being detected by flexible hanging antennas.

### Detailed Description of Example Embodiments of the Invention

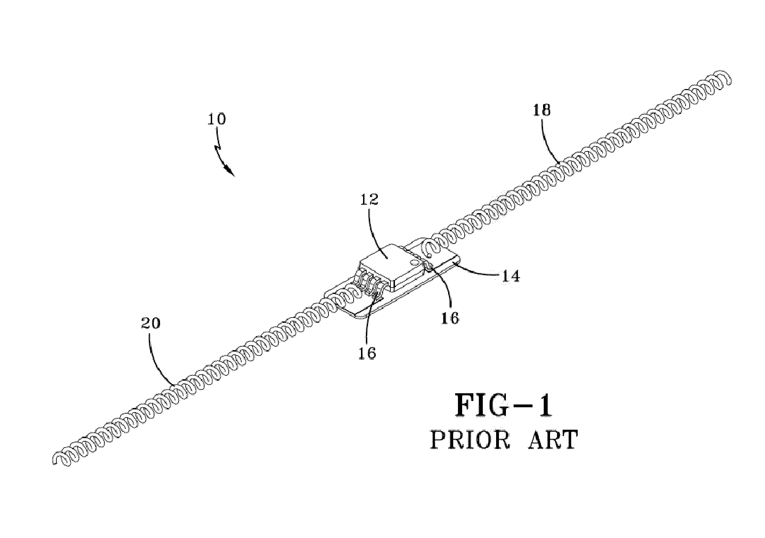

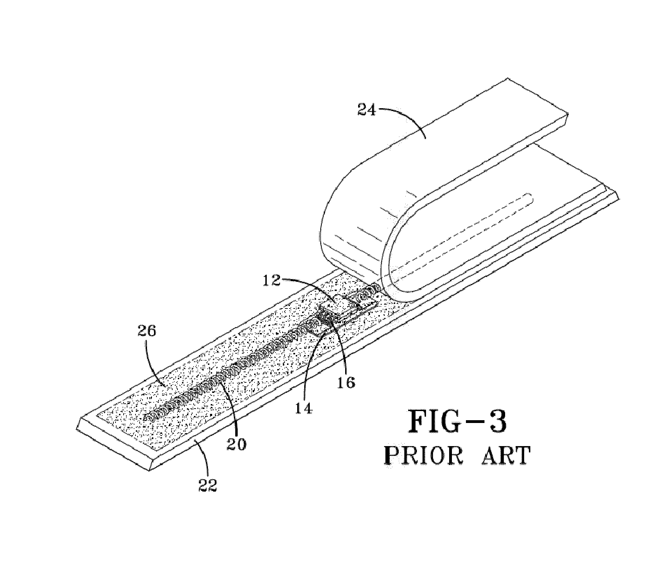

Referring to FIGS. 1 and 3, the use of RFID tags such as tag 10 in products for the purpose of enabling an electronic identification of the product is well know. Such tags are affixed to or embedded into a product in a manufacturing or post-manufacturing procedure and remain with the product during post-manufacture handling, shipping, the supply chain, and even use of the product throughout its useful service life. Because, in certain products such as tires, RFID tags may be embedded into the tire during tire manufacture, the RFID tags may have a limited performance range, making it necessary that a reader antenna be brought into close enough proximity to excite the tag. An antenna portal system is disclosed as follows which provides sufficient RF power to excite RFID tags, mechanical robustness to withstand years of use, ease of installation and compatibility with existing RFID readers/eNodes. While the particular reader portal for reading RFID tags is shown in the context of tire manufacture and management, it will be appreciated that the invention is not so limited. Other products may employ the reader portal teachings herein set forth in a variety of manufacturing applications.

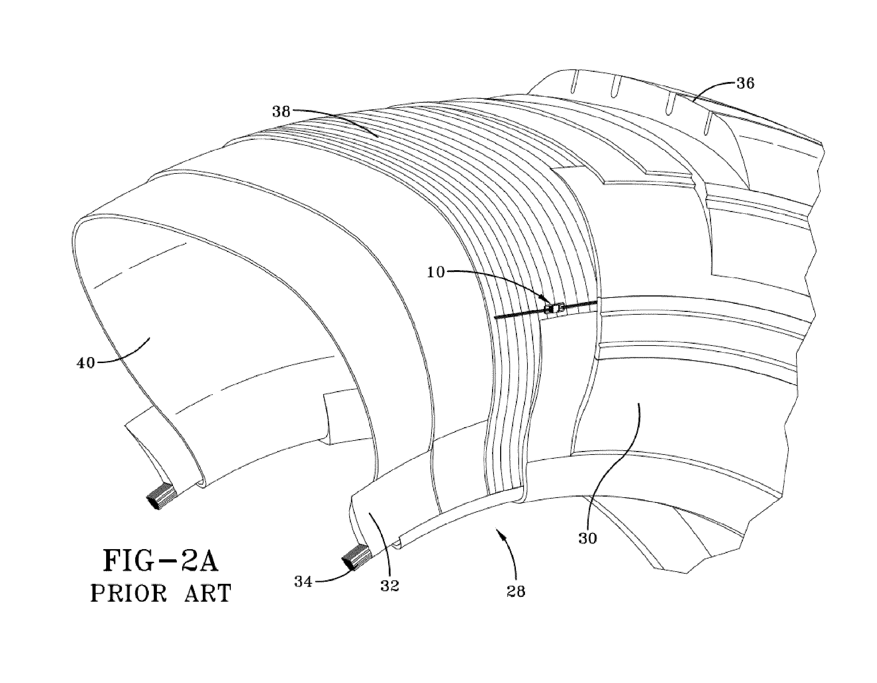

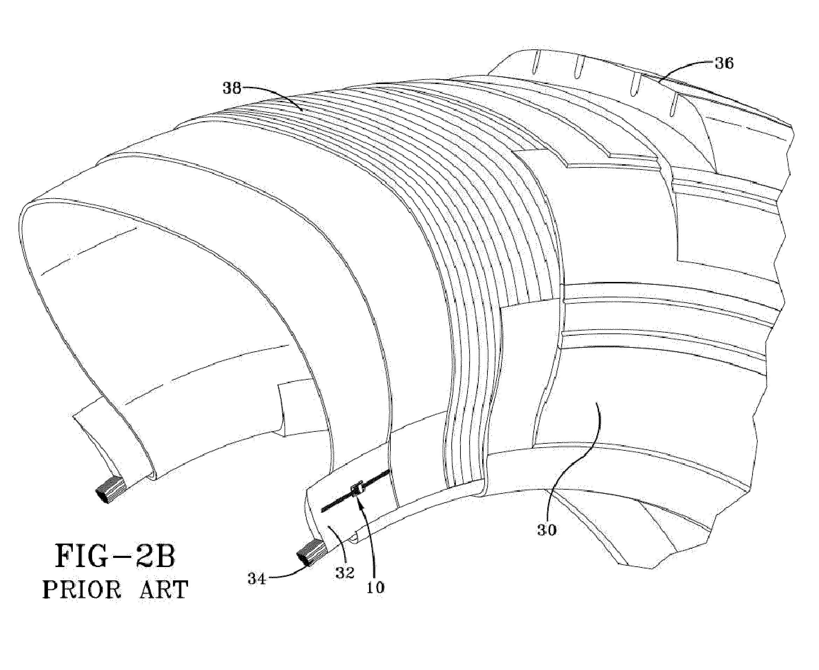

FIGS. 1 and 3 show an RFID tag 10 constructed having an electronic package 12 mounted to a substrate 14 with contacts 16 of the RFID electronics coupled to dipole antennas 18, 20. The tag construction 10 is sandwiched between two strips 22, 24 of protective material such as plastic, with the tag 10 affixed by a layer of adhesive 26 between the strips 22, 24. The completed tag assembly is suitable for incorporation into myriad products including a tire 28 as shown in FIGS. 2A and 2B. The tire 28 is of conventional construction having a pair of sidewalls 30 extending from dual bead components 34 to a tire tread 36. A pair of chafer components 32 are positioned adjacent respective beads 24. The tire is further constructed having one or more reinforcement plies 38 and an inner liner component 40 which surrounds the tire air cavity.

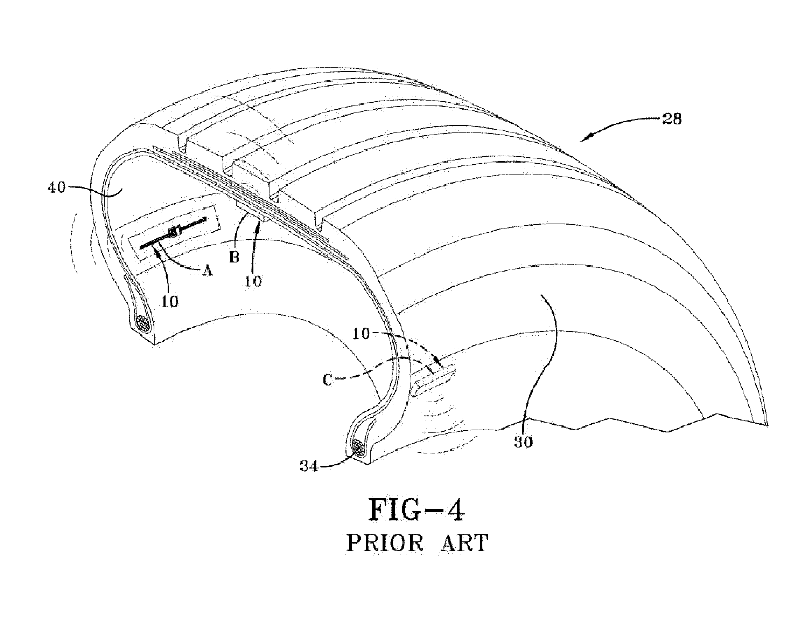

The tag 10 may be affixed in several manners and at several alternative locations on the tire 28. FIG. 2A shows a placement of the tag 10 against a reinforcement ply 38 during tire build. Alternatively, the tag 10 may be placed during tire construction against a chafer component 32 as shown in FIG. 2B. In a post-manufacture attachment, the tag 10 may be placed and affixed by adhesive to the tire in several locations such as location "A" against inner liner 40 sidewall region as shown in FIG. 4 or location "B" against the inner liner crown region. Location "C" shown the incorporation of the tag against the chafer component as shown in FIG. 2B. One or more tags may be incorporated into the tire in the locations shown.

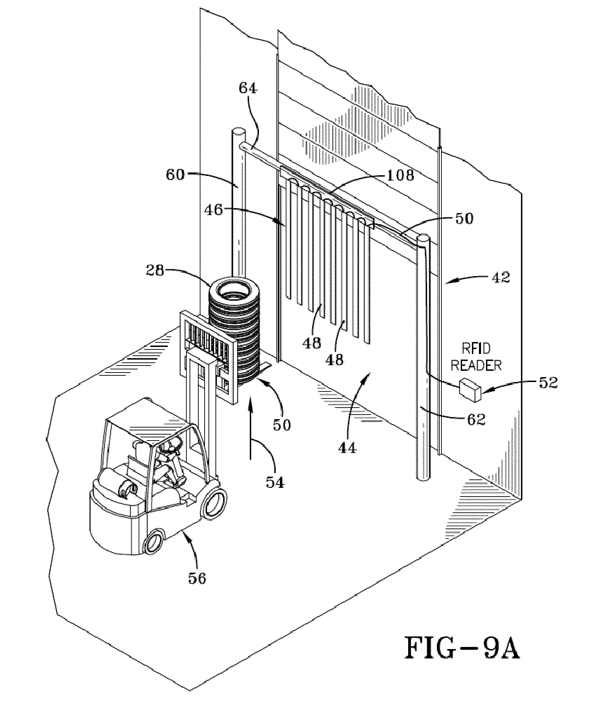

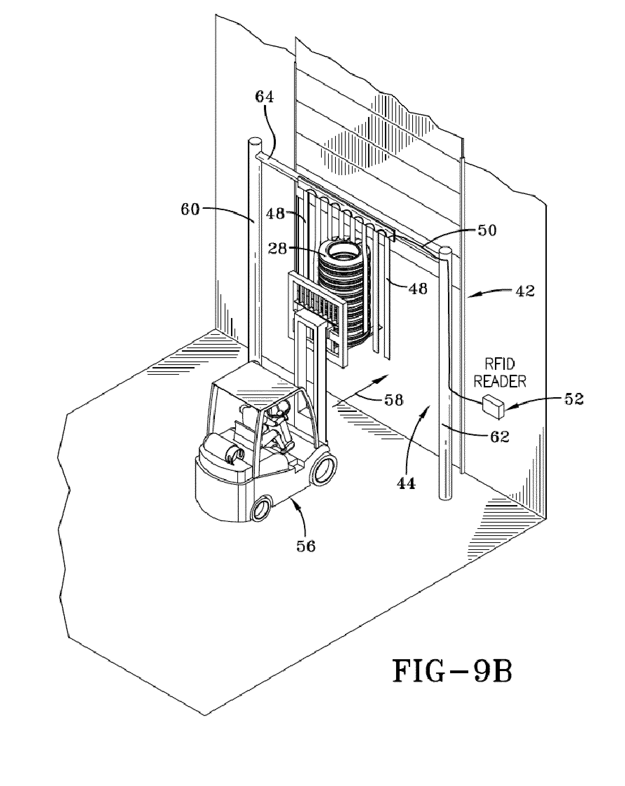

With reference to FIGS. 9A and 9B, a system for tracking tires throughout the manufacturing and supply chain channels is shown. Tires equipped with RFID tags are generally transported within manufacturing facilities in groups, such as stacked up to ten feet high on a forklift. It is desirable but technically difficult to be able to track tires passing through portals while stacked on forklifts because the carbon in tires may cause the effective RFID tag performance range to degrade significantly. This requires placing antennas very close to tires. The system and method represented in FIGS. 9A and 9B overcomes the limited read distance of RFID tags in tires by providing a pass-through portal 42 in which a reading of tire based RFID tags is achieved. The portal 42 includes a pass-through opening 44. A flexible antenna curtain 46 hangs into the opening 44 and is constructed from multiple side-by-side hanging antenna strips 48. The antenna strips 48 are wired at 50 to an RFID reader 52 located proximally or remotely from the pass-through portal 42. A stack of tires 28 may be hoisted (arrow 54) by a fork-lift 56 and oriented to pass through the opening 44. The tires 28 are equipped with one or more RFID tags as described above, located in the tire or on one or affixed to one or more tire surfaces.

FIG. 9B shows the stack of tires 28 transported through the portal opening 44 in direction 58. The opening 44 is sized to closely admit and pass through the stack and fork lift 56. The curtain 46 formed by antenna strips 48 is sized to occupy a large percent of the opening 44 such that engagement of each tire 28 within the stack by one or more of the antenna strips 48 is ensured. Thus, the antenna strips 48 will be placed into physically close proximity to the embedded or attached tire tags. Proximal location of the strips 48 to the tags ensures a positive and reliable reading of the tags by the antenna strips 48.

It is contemplated that multiple strips 48 will be employed within the portal opening to form the curtain 56. For example, four strips may be placed in the portal, each strip being nine inches wide with nine inch spacing between the strips. The curtain 56 will thus occupy and provide over five feet of coverage. As shown, the portal 42 is defined by vertical support posts 60, 62 and an upper cross-beam 64 supported by posts 60, 62. The opening 44 occupies the spacing between the posts, cross-beam and the floor surface. As the tires move through the portal, the tires will brush against and push back one or more of the curtain strips 48. This mobility will provide diversity that will ensure that each tag will move through at least one strong read field and likely several strong read fields. The antenna curtain 56 formed by the antenna strips 48 is constructed to be flexible and easily swung by direct engagement with the moving stack of tires. Moreover, the curtain strips are easily hung and readily connected to the system RFID reader/eNode 52 as will be explained.

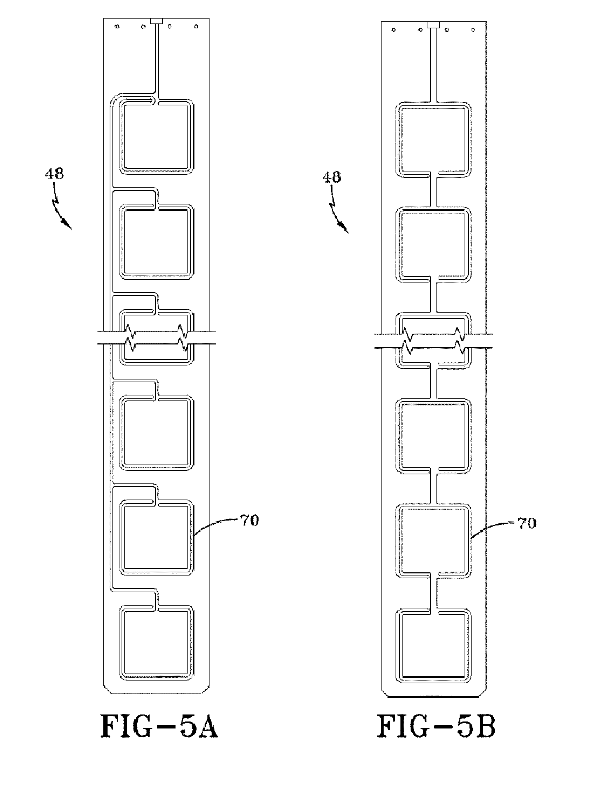

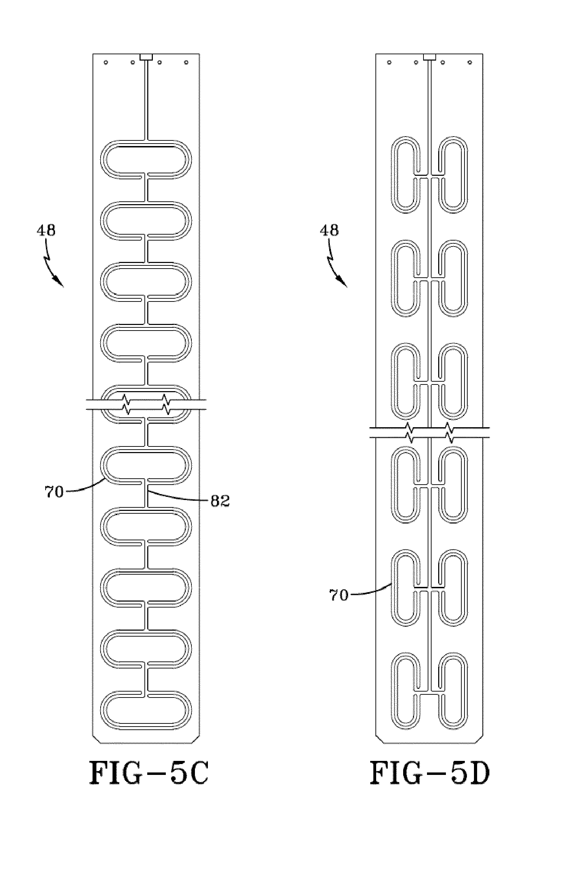

Referring to FIGS. 5A through D, 6A, 6B and 7, each curtain antenna strip 48 is constructed as a conductive loop antenna array 70 sandwiched between layers 66, 68 composed of non-conductive material such as plastic. A suitable adhesive may be employed to affix the layers 66, 68 together with the antenna array 70 between. Layers 66, 68 may be formed of any suitable material such as clear, flexible PVC, polyester, or a composite combination of both. The material selected for the strips is preferably transparent or semi-transparent to enable light projection through the portal opening as well as visibility through the curtain by the equipment operator. The antenna radiating arrays 70 within the strips 48 are composed of thin conductive metal of sufficient physical strength to withstand cyclical flexing by the curtain as well as functionally capable of providing the requisite radiating properties to generate a field of adequate strength.

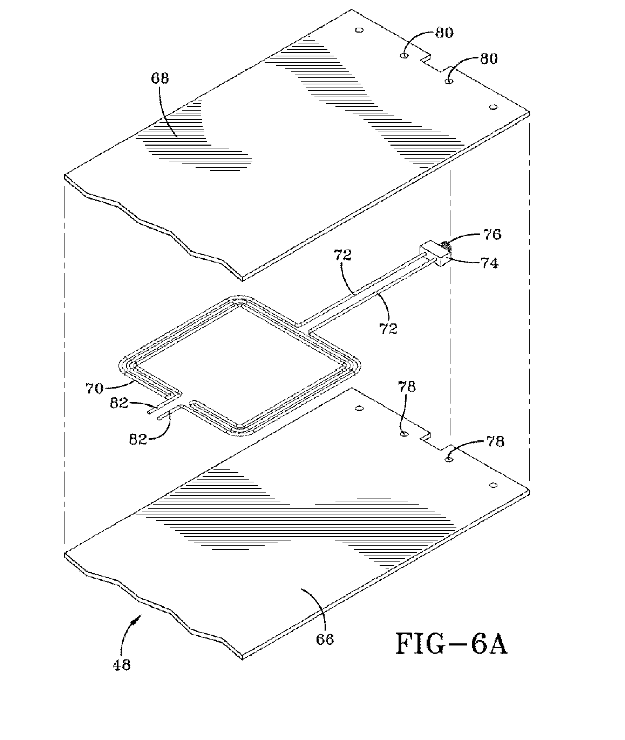

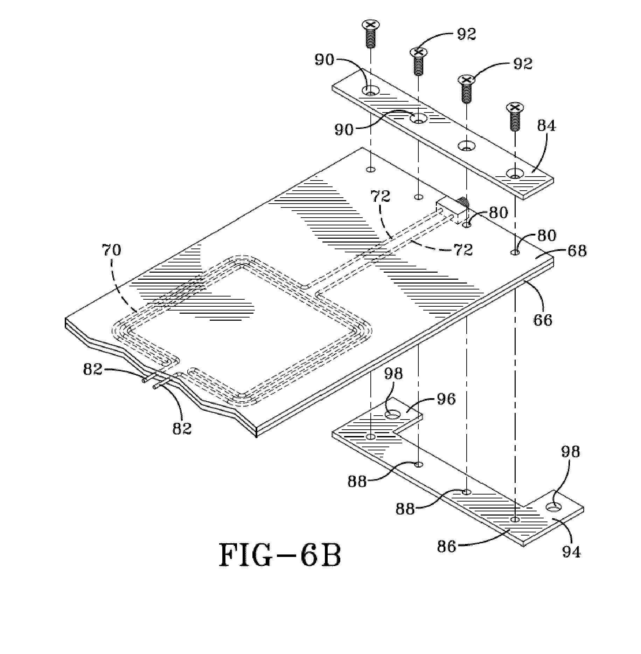

Leads 72 access the radiating antenna loop elements 70. The loop elements 70 may be arranged in any suitable array such as the alternative schematic antenna embodiments shown in FIGS. 5A through D, interconnected by conductive wiring 82. The leads 72 are directed to a junction box 74 having a screw threaded coupling attachment. To construct the hanging curtain 46, the antenna strips 48 are provided with a spaced apart series of assembly apertures 78, 80 extending across an upper edge of each layer 66, 68 respectively. As shown in FIG. 6B, the upper edges of layers 66, 68 are positioned between bracket strips 84, 86 having through-hole arrays 88, 90 corresponding to the placement of holes through the layers. Assembly screws 92 extend through the co-aligned apertures 88, 90 and layer apertures 78, 80 to complete assembly of the support bracket of each curtain strip. The lower bracket strip 86 provides extension flanges 94, 96 at opposite ends, each arm having an aperture 98 therethrough.

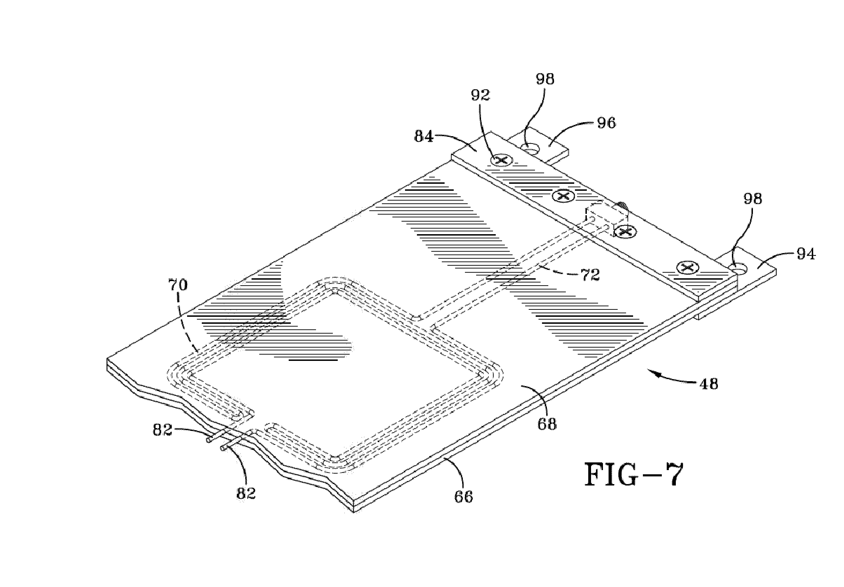

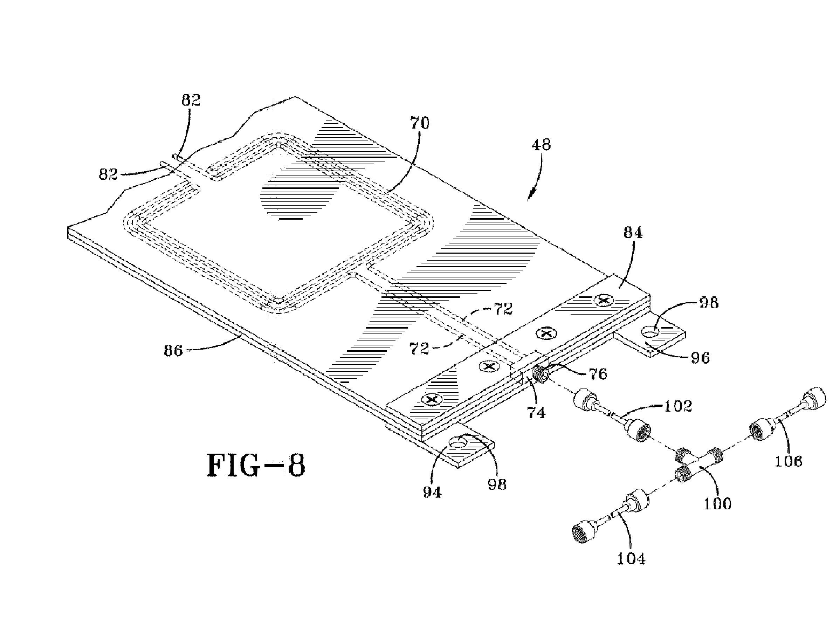

The upper end of a representative, completed antenna strip 48 is shown in FIG. 7. The curtain strips 48 are assembled to a cross frame beam 108 by screw hardware (not shown) extending through flange apertures 98 as will be seen from FIGS 8 and 9A. The strips 48 are hung adjacent with a space between adjacent strips in a spaced array along the beam 108.

The strips flexible pivot about the frame attachment at the top edge, and swing freely in the portal opening. Conduits and connectors extend from each strip to the reader 52 as will be seen from FIG. 8. A T-connector 100 couples with conduits 102, 104, 106 by means of screw fittings, and the conduit 102 connects the assembly of 100, 102, 104, 106 to the screw threaded collar 76 of box 74. Electrical connection of the reader to the antenna circuitry through the assembled conduits 100, 102, 104, 106 is thus established.

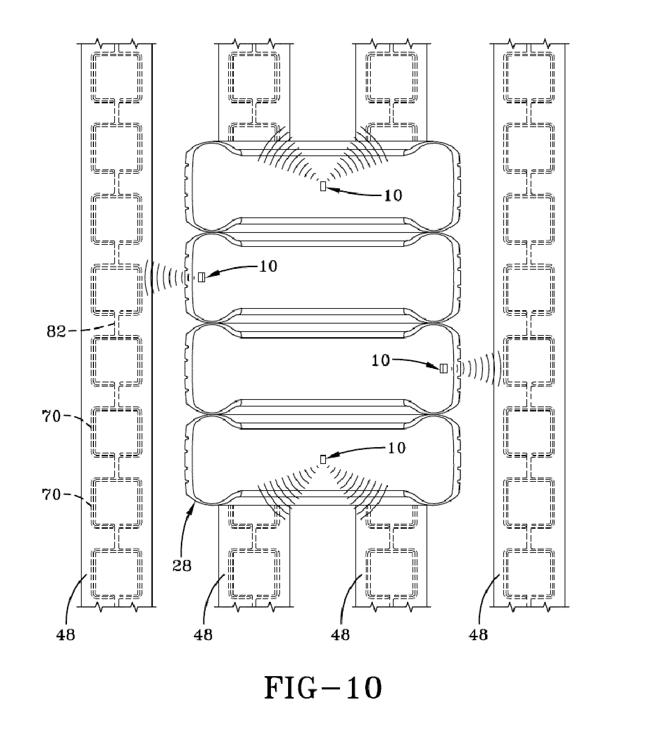

FIG. 10 shows in schematic form the stack of tires of FIG. 9 engaging the antenna strips 48 as the stack is moved through portal opening 33. The RFID tag(s) attached to each tire, regardless of their attachment, are each brought into a reading proximity with at least one field generated by the antenna strips 48. Because of the number of antenna strips employed, their mutual spacing, the curtain 46 may be configured to occupy a substantial area of the opening 44, thus creating a high probability that the RFID tag(s) carried by the stack of tires will move through at least one strong read field, and likely several strong read fields. Because the tag likely passes through multiple read fields, redundant readings of the tag may occur which will enhance system read reliability and performance.

Thus, the reader antenna within strips 48 are located close enough to excite the tag. Moreover, the antenna strips 48 are constructed to protectively sandwich the antenna circuitry between dual layers of laminate strips 22, 24, rendering the assembled strips 48 mechanically robust and capable of withstanding repeated flexing cycles. The strips 48 through the frame attachment described above are readily installed within a portal opening in at manufacturing or warehouse location or any other stop in the distribution channel. The antenna system is compatible with conventional and commercially available readers/eNodes, making the pass-through product management system cost effective to implement, service and operate. While tires are the exemplary products used in the foregoing description, the system may be adapted and used for other product categories where transportation of products carrying a RFID tag(s) are routed through a portal opening in the course of manufacture or subsequent distribution.

## Claims

1. A product management system for reading an electronic identification tag, the system comprising:
at least one manufactured product (28) having the electronic identification tag (10) secured to the one product (28);
a pass-through portal (42) having a portal opening (44) positioned and dimensioned to permit the at least one product (28) to be transported through the portal opening (44);
a flexible swingable curtain (46) suspended at the portal (42) to depend downward into the portal opening (44), wherein the curtain (46) within the portal opening (44) is positioned for contacting engagement with the at least one product (28) whereby the curtain (46) operatively swings and engages against the at least one product (28) as the at least one product (28) passes through the portal opening (44);
antenna element means (48) secured to the flexible curtain (46) for swinging with the curtain (46) into a position operatively accommodating receipt by the antenna element means (48) of an electronic transmission from the electronic identification tag (10) as the at least one product (28) moves through the portal opening (44).

2. The product management system according to claim 1, wherein the electronic identification tag (10) comprises an RFID identification tag.

3. The product management system according to claim 1 or 2, further comprising an electronic reader (52) coupled to receive the electronic transmission from the antenna element means (48).

4. The product management system according to at least one of the previous claims, wherein the antenna element means (48) is contained within the flexible curtain (46).

5. The product management system according to at least one of the previous claims, wherein the antenna element means (48) is composed of a flexible material composition enabling the antenna element means (48) to flex with the flexible curtain (46).

6. The product management system according to at least one of the previous claims, wherein the flexible curtain (46) is positioned and configured to substantially ensure contact with the at least one product (28) as the at least one product (28) moves through the portal opening (44).

7. The product management system according to at least one of the previous claims, wherein the curtain (46) comprises a plurality of vertically suspended, independently swingable, flexible strips, the plurality of strips having a mutual spacing and position within the portal opening (44) to substantially ensure that at least one of the flexible strips contacts the at least one product (28) as the at least one product (28) moves through the portal opening (44), and, optionally, wherein the flexible strips are at least partially composed of substantially transparent material.

8. The product management system according to at least one of the previous claims, wherein the at least one product (28) is a plurality of products (28) or a plurality of products (28) arranged in at least one vertical stack, each of the products (28) having an electronic identification tag (10) secured thereto, the flexible swingable curtain (46) having a position and configuration to substantially ensure contact with each of the plurality of products (28) as the plurality of products (28) move through the portal opening (44)

9. The product management system according to at least one of the previous claims, wherein the portal opening (44) is configured and positioned to operatively accommodate a close passage of a transportation means (56) for moving the plurality of products (28) or the vertical stack of the products (28) through the portal opening (44).

10. The product management system according to at least one of the previous claims, wherein the curtain (46) is configured and positioned to occupy at least a substantial area region of the portal opening (44).

11. The product management system according to at least one of the previous claims, wherein the at least one product is a tire or a pneumatic tire (28).

12. A method of managing product identification by reading an electronic identification tag (10), the method comprising:
providing at least one manufactured product (28) with an electronic identification tag (10) secured to the one product (28);
locating a pass-through portal (42) having a portal opening (44) to permit the at least one product (28) to be transported through the portal opening (44);
suspending a flexible swingable curtain (46) at the portal (42) to depend downward into the portal opening (44);
securing antenna means (48) to the flexible curtain (46);
contacting the at least one product (28) with the curtain (46) as the one product (28) passes through the portal opening (44);
moving the antenna means (48) within reading range of the electronic identification tag (10) as the curtain (46) contacts the at least one product (28);
reading a data transmission from the electronic identification tag (10) to the antenna means (48) as the at least one product (28) passes through the portal opening (44).

13. The method of claim 12, further comprising at least one of:
(i) configuring the curtain (46) to comprise a plurality of vertically suspended, independently swingable, flexible strips, the plurality of strips having a mutual spacing and position within the portal opening (44) to substantially ensure that at least one of the flexible strips contacts the at least one product (28) as the one product (28) moves through the portal opening (44);
(ii) arranging a plurality of the products (28) in a vertical stack, each of the products (28) having an electronic identification tag (10) secured thereto; moving the vertical stack of the products (28) through the portal opening (44), and contacting each of the products (28) within the vertical stack with at least one of the flexible strips as the plurality of the products (28) move through the portal opening (44) as a stack.

14. The method of claim 13, further comprising placing at least one antenna element means (48) in each of the flexible strips.

15. The method according to at least one of the previous claims, wherein the at least one product is a tire or a pneumatic tire (28).
